# EUROPÄISCHE PATENTANMELDUNG

(11) **EP 1 882 861 A2**
(43) Veröffentlichungstag der Anmeldung: **30.01.2008**
(21) Anmeldenummer: 07013444.0
(22) Anmeldetag: 10.07.2007
(51) Int. Cl.: F16C 33/66

(54) **Wälz- oder Linearlager**

(30) Priorität: 28.07.2006 DE 102006034966
(71) Anmelder: Schaeffler KG, 91074 Herzogenaurach (DE)
(72) Erfinder: Glück, Stefan, 97424 Schweinfurt (DE)

(57) **Zusammenfassung**

Wälz- oder Linearlager, umfassend einen Käfig, mehrere in diesem gehalterte Wälzkörper sowie eine oder mehrere Laufflächen, auf denen die Wälzkörper laufen, wenigstens ein Dichtelement, sowie einen der Lagerschmierung dienenden Schmierstoff, wobei der Schmierstoff (10) ein Ferrofluid (11) ist und am Käfig (6) und/oder an den Wälzkörpern (7) und/oder der oder den Laufflächen (3, 5) und/oder dem oder den Dichtelementen ein oder mehrere mit dem Ferrofluid (11) zusammenwirkende magnetische Abschnitte (9) vorgesehen sind.

## Beschreibung

### Gebiet der Erfindung

Die Erfindung betrifft ein Wälz- oder Linearlager, umfassend einen Käfig, mehrere in diesem gehalterte Wälzkörper sowie eine oder mehrere Laufflächen, auf denen die Wälzkörper laufen, wenigstens ein Dichtelement sowie einen der Lagerschmierung dienenden Schmierstoff.

### Hintergrund der Erfindung

Bekannte Wälz- oder Linearlager weisen üblicherweise eine Fettschmierung auf, d.h. als Schmierstoff in beachtlichem Mengenüberschuss ist im Lager ein Schmierfett vorgesehen, wobei ein Auslaufen weitgehend über ein oder mehrere Dichtelemente verhindert wird. Falls die Dichtung jedoch beschädigt wird, kann das Fettreservoir auslaufen. Gleichwohl ist eine Fettschmierung gegenüber einer Ölumlaufschmierung zweckmäßig, da die Ölumlaufschmierung nur sehr aufwendig unter Verwendung geeigneter Zusatzaggregate möglich ist, während bei einer Fettschmierung die Lokalisierung des Fettes im Wälzlagerinneren bereits allein aufgrund der Viskosität des Fettes möglich ist. Gleichwohl können wie beschrieben auch bei Fettschmierung Schwierigkeiten gegeben sein, wenn eben das Fett beispielsweise bei beschädigtem Dichtelement oder dergleichen nicht wirksam im Lagerinneren gehalten werden kann.

### Zusammenfassung der Erfindung

Der Erfindung liegt damit das Problem zugrunde, ein Wälz- oder Linearlager anzugeben, das eine verbesserte Möglichkeit zur Lokalisierung des Schmierstoffs im Lagerinneren aufweist.

Zur Lösung dieses Problems ist bei einem Wälz- oder Linearlager der eingangsgenannten Art erfindungsgemäß vorgesehen, dass der Schmierstoff ein Ferrofluid ist und am Käfig und/oder an den Wälzkörpern und/oder der oder den Laufflächen und/oder dem oder den Dichtelementen ein oder mehrere mit dem Ferrofluid zusammenwirkende magnetische Abschnitte vorgesehen sind.

Das erfindungsgemäße Wälz- oder Linearlager sieht einen völlig neuartigen Schmierstoff vor, nämlich ein Ferrofluid. Ein Ferrofluid ist eine Flüssigkeit, die auf ein magnetisches Feld reagiert. Für solche Fluide geeignete Stoffe bestehen aus in der Regel nur nanometergroßen magnetischen Partikeln, die in einer Trägerflüssigkeit, bevorzugt einem Öl kolodial suspendiert sind. Diese ferromagnetischen Partikel sind üblicherweise mit einer polymeren Oberflächenbeschichtung stabilisiert, wobei zur Schmierung bei dem erfindungsgemäßen Lager als Beschichtung zweckmäßigerweise eine Teflonbeschichtung eingesetzt wird. Das Ferrofluid selbst ist eine stabile Dispersion, d.h., die festen ferromagnetischen Teilchen setzen sich mit der Zeit nicht ab und lagern sich auch in starken Magnetfeldern nicht aneinander an. Ferrofluide zeigen damit superparamagnetische Eigenschaften und besitzen eine sehr geringe Hysterese.

Erfindungsgemäß wird nun ein solches Ferrofluid im Wälz- oder Linearlager eingesetzt. Das Lager selbst weist einen oder mehrere magnetische Abschnitte auf, die zur Lokalisierung des Ferrofluids im Lagerinneren dienen. Die ferromagnetischen Nanopartikel bzw. das Ferrofluid lagert sich, getrieben durch die Reaktion mit dem Magnetfeld des oder der magnetischen Abschnitte, an diesem oder diesen Abschnitten an, dort kann also ohne weiteres ein Schmierstoffreservoir ausgebildet werden. Auf diese Weise und bedingt durch den Umstand, dass Ferrofluid, das von einem beweglichen Teil des Lagers aus dem Reservoir zu Schmierzwecken geführt wurde und wieder "frei" wird, sich durch das Magnetfeld bedingt wieder in einem der magnetischen Abschnitte sammelt, kann mit besonders großer Effizienz die Lokalisierung des Ferrofluids im Lagerinneren realisiert werden.

Ein magnetischer Abschnitt kann erfindungsgemäß durch ein integriertes permanentmagnetisches Material realisiert werden. Das heißt, je nach Größe des Lagers kann ein oder können mehrere permanentmagnetische Elemente an entsprechender Position angeordnet werden, wobei unter dem Begriff "permanentmagnetisches Element" natürlich auch entsprechende dünne Beschichtungen mit permanentmagnetischem Material und dergleichen zu verstehen sind. Alternativ zur Integration eines oder mehrerer separater permanentmagnetischer Elemente ist es auch denkbar, durch ggf. abschnittsweises Magnetisieren des Käfigs, der Wälzkörper oder der Laufflächen selbst die magnetischen Abschnitte zu realisieren. In diesem Fall wäre es erforderlich, dass der Käfig bzw. die Wälzkörper bzw. das oder die die Laufflächen bildenden Lagerelemente aus ferromagnetischem Material sind.

Besonders zweckmäßig ist es, wenn am Käfig die einzelnen Wälzkörper aufnehmende Taschen vorgesehen sind und die taschennahen Bereiche des Käfigs als magnetische Abschnitte ausgeführt sind, sei es durch Integration eines permanentmagnetischen Elements oder durch lokale Magnetisierung.

### Kurze Beschreibung der Zeichnungen

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Schnittansicht durch einen Abschnitt eines erfindungsgemäßen Wälzlagers,
- Fig. 2: eine vergrößerte Teilansicht (Aufsicht) auf den Käfig nebst Wälzkörpern aus Fig. 1, und
- Fig. 3: eine Schnittansicht durch den Käfig aus Fig. 2 in Richtung der Linie III-III.

### Detaillierte Beschreibung der Zeichnungen

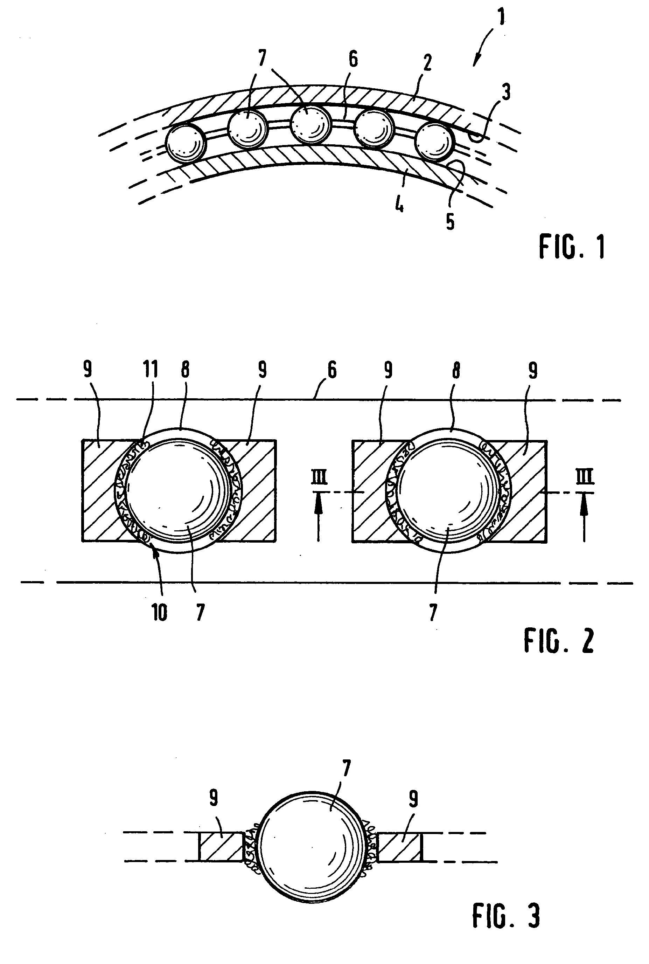

Fig. 1 zeigt ein erfindungsgemäßes Wälzlager 1 in Form einer Prinzipdarstellung. Gezeigt ist ein äußerer Lagerring 2 mit einer an der Innenseite vorgesehenen Lauffläche 3, ein innerer Lagerring 4 mit einer an der Innenseite vorgesehenen Lauffläche 5 sowie ein Käfig 6, in dem mehrere Wälzkörper 7, hier in Form von Kugeln, aufgenommen gehaltert sind, die auf den beiden Laufflächen 3, 5 abrollen und so eine Relativbewegung des Außenrings 2 zum Innenring 4 ermöglichen. Der Aufbau eines solchen Wälzlagers ist hinreichend bekannt und bedarf keiner näheren Erläuterung mehr.

Fig. 2 zeigt in vergrößerter Darstellung den Käfig 6. In diesem sind in äquidistanten Abständen Taschen 8 in Form kreisrunder Durchbrechungen ausgeführt, in denen die Wälzkörper 7 aufgenommen sind und so äquidistant beabstandet werden können. In einander gegenüberliegenden Randabschnitten, angrenzend an die jeweiligen Taschen 8, sind an jeder Tasche 8 magnetische Abschnitte 9 ausgebildet. Diese können entweder dadurch ausgebildet werden, dass in entsprechende, der Geometrie des Abschnitts angepasste Ausnehmungen kleine Permanentmagnete eingesetzt werden, die diese Bereiche 9 definieren, d.h., ein solcher magnetischer Bereich besteht direkt aus einem permanentmagnetischen Element, das in eine entsprechende Ausnehmung eingesetzt wurde. Denkbar wäre es auch, den Käfig 6, der dann aus einem ferromagnetischen Material bestehen müsste, abschnittsweise zu magnetisieren, um diese magnetischen Bereiche 9 zu erzeugen. Denkbar wäre es grundsätzlich aber auch, den Käfig komplett zu magnetisieren, mithin den Käfig selbst als magnetischen Abschnitt auszugestalten.

In jedem Fall befinden sich die magnetischen Abschnitte unmittelbar angrenzend an die jeweiligen Taschen 8. Es bildet sich ein Magnetfeld zwischen den magnetischen Abschnitten 9 und dem jeweiligen Wälzkörper 7 aus. In diesem Magnetfeld sammelt sich nun der Schmierstoff 10, bei dem es sich hier um ein Ferrofluid 11 handelt. Dieses Ferrofluid 11 reagiert auf ein magnetisches Feld, wie es hier über die magnetischen Abschnitte 9 realisiert bzw. ausgebildet wird. Das heißt, der Schmierstoff sammelt sich im unmittelbaren Bereich zwischen den Wälzkörpern 7 und den Taschen 8 an. Dreht sich nun der Wälzkörper 7 in der jeweiligen Käfigtasche 8, so wird er von dem im Spalt zwischen dem Wälzkörper 7 und der Tasche 8 befindlichen Ferrofluid-Schmierstoff ständig neu benetzt, mithin also geschmiert. Das Ferrofluid 11 selbst bleibt in diesem Bereich bzw. Ferrofluid, das durch die Relativbewegung der Lagerringe 2 bzw. 4 bzw. der Wälzkörper 7 selbst bewegt und abgeführt wurde, lagert sich nach Freiwerden wiederum an einem magnetischen Bereich 9 und dem dortigen Magnetfeld an. Mithin kann also eine sehr gute Lokalisierung des Ferrofluid-Schmierstoffs im Lagerinneren realisiert werden. Einem etwaigen Dichtelement, das in den Figuren nicht näher gezeigt ist, jedoch üblicherweise verwendet wird, kommt nunmehr lediglich noch die Dichtfunktion gegen ein Eindringen von Partikeln aus der Umgebung in das Lagerinnere zu, nicht aber mehr die Dichtfunktion zur Rückhaltung des Schmierstoffs im Lagerinneren, da dies über die Magnetfeld-Wechselwirkung zurückgehalten wird.

Wenngleich die Figuren 2 und 3 die Anordnung der magnetischen Bereiche an dem Käfig 6 im Bereich der Taschen 8 zeigen, wäre es selbstverständlich auch denkbar, solche magnetischen Bereiche an den Laufflächen 3 oder 5 der Lagerringe 2, 4 auszubilden, ebenfalls durch lokale Integration permanentmagnetischer Elemente oder in Form einer aus einem permanentmagnetischen Material bestehenden Beschichtung etc. Auch eine Anordnung dieser permanentmagnetischen Bereiche an den Wälzkörpern selbst oder der Dichtung ist grundsätzlich denkbar. Als Ferrofluid kann jedes Ferrofluid verwendet werden, das gleichzeitig auch einen Schmiereffekt bietet und den lagerspezifischen Viskositätsanforderungen entspricht.

### Bezugszeichenliste

- 1: Wälzlager
- 2: Lagerring
- 3: Lauffläche
- 4: Lagerring
- 5: Lauffläche
- 6: Käfig
- 7: Wälzkörper
- 8: Tasche
- 9: Magnetischer Abschnitt
- 10: Schmierstoff
- **11**: **Ferrofluid**

## Patentansprüche

1. Wälz- oder Linearlager, umfassend einen Käfig, mehrere in diesem gehalterte Wälzkörper sowie eine oder mehrere Laufflächen, auf denen die Wälzkörper laufen, wenigstens ein Dichtelement, sowie einen der Lagerschmierung dienenden Schmierstoff, **dadurch gekennzeichnet, dass** der Schmierstoff (10) ein Ferrofluid (11) ist und am Käfig (6) und/oder an den Wälzkörpern (7) und/oder der oder den Laufflächen (3, 5) und/oder dem oder den Dichtelementen ein oder mehrere mit dem Ferrofluid (11) zusammenwirkende magnetische Abschnitte (9) vorgesehen sind.

2. Wälz- oder Linearlager nach Anspruch 1, **dadurch gekennzeichnet, dass** der oder ein magnetsicher Abschnitt (9) durch ein integriertes permanentmagnetisches Element oder durch gegebenenfalls abschnittsweises Magnetisieren des Käfigs, der Wälzkörper oder der Laufflächen realisiert ist.

3. Wälz- oder Linearlager nach Anspruch 1 oder 2, **dadurch gekennzeichnet, dass** am Käfig (6) die einzelnen Wälzkörper (7) aufnehmende Taschen (8) vorgesehen sind und die taschennahen Bereiche des Käfigs (6) als magnetische Abschnitte (9) ausgeführt sind.
